# EUROPEAN PATENT APPLICATION

(11) **EP 0 595 597 A1**
(43) Date of publication of application: **04.05.1994**
(21) Application number: 93308514.4
(22) Date of filing: 26.10.1993
(51) Int. Cl.: C07F 9/12, C07F 9/06

(54) **Process for producing triaryl phosphate**

(30) Priority: 28.10.1992 JP 290229/92
(71) Applicant: Teijin Chemicals, Ltd., Tokyo 105 (JP)
(72) Inventor: Ohira, Yoji, Mihara-shi, Hiroshima-ken (JP); Hayami, Kazuo, Mihara-shi, Hiroshima-ken (JP); Souda, Sinichi, Iwakuni-shi, Yamaguchi-ken (JP)
(74) Representative: Votier, Sidney David

(57) **Abstract**

A process for producing triaryl phosphate, comprising reacting at least one specific aromatic hydroxy compound with phosphorus pentachloride to form a chlorophosphorane compound and reacting water, an alcohol, an alcohol aqueous solution or an alkaline aqueous solution with the chlorophosphorane compound. The process permits the production of triaryl phosphate at high yields at a low temperature for a relatively short period of time, making the removal and treatment of a catalyst simply and obviating the use of the catalyst in some cases.

## Description

### BACKGROUND OF THE INVENTION

### Field of the Invention

The present invention relates to a novel process for producing triaryl phosphate. More specifically, it relates to a novel process for producing triaryl phosphate from an aromatic hydroxy compound and phosphorus pentachloride as main raw materials.

### Related Art

Phosphor-containing organic compounds are recently attracting attention as raw materials for imparting polymer compounds with high functions. Among them is triaryl phosphate generally useful as a flame retardant, a stabilizer, a plasticizer and a compatibilizer for polymer compounds.

It is known that triaryl phosphate is produced by a method in which phosphorus oxychloride and a phenol compound are allowed to react in the presence of a hydrogen chloride-removing agent such as an amine or a catalsyt of a Lewis acid such as aluminum chloride (e.g., Japanese Laid-open Patent Publication No. 47953/1975). However, the problem with the above method is that it requires complicated means to remove or dispose of the catalyst used and salts formed. Phosphor oxychloride and a phenol compound can be allowed to react in the absence of the catalyst, while this reaction requires a long period of time and is hence poor in economic performance.

### SUMMARY OF THE INVENTION

It is a first object of the present invention to provide an industrially advantageous process for producing triaryl phosphate.

It is a second object of the present invention to provide a facile process for producing triaryl phosphate at high yields.

It is a third object of the present invention to provide a process for producing triaryl phosphate at a low temperature for a relatively short period of time.

It is another object of the present invention to provide a process for producing triaryl phosphate in the presence or absence of a catalyst or a solvent.

According to the present invention, the above objects and advantages of the present invention are achieved by a process for producing a triaryl phosphate of the formula (II), 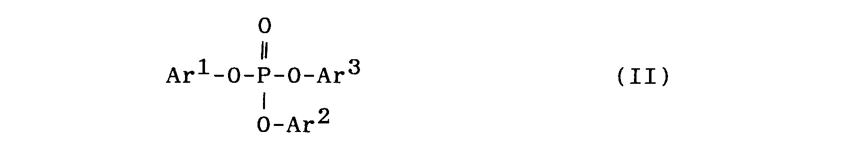
wherein each of Ar¹, Ar² and Ar³ is independently derived from aromatic hydrocarbon skeletons of 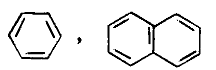
and 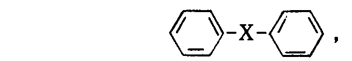
in which X is a single bond, -CH₂-, -O-, -C(O)-, -S-, -SO₂-, an alkylidene group having 2 to 6 carbon atoms or a cycloalkylidene group having 3 to 6 carbon atoms, and each of Ar¹, Ar² and Ar³ may be also substituted with at least one selected from the class consisting of a lower alkyl group, a lower alkoxy group and a halogen atom, provided that any two of Ar¹, Ar² and Ar³ may be one aromatic hydrocarbon skeleton,
which comprises reacting an aromatic hydroxy compound of the formula (I),

HO-Ar-(OH)ₚ (I)

wherein p is 0 or 1, provided that when p is 1, two OH groups bond to positions in Ar where the two OH groups can bond to one phosphorus pentachloride, and Ar is an aromatic hydrocarbon skeleton of 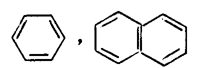
or 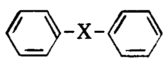
in which X is a single bond, -CH₂-, -O-, -C(O)-, -S-, -SO₂-, an alkylidene group having 2 to 6 carbon atoms or a cycloalkylidene group having 3 to 6 carbon atoms, and Ar may be also substituted with at least one selected from the class consisting of a lower alkyl group, a lower alkoxy group and a halogen atom,
with phosphorus pentachloride to form a chlorophosphorane compound, and then reacting water, an alcohol, an alcohol aqueous solution or an alkaline aqueous solution with the chlorophosphorane compound.

In short, the above process of the present invention comprises two steps: the first step of forming the chlorophosphorane compound (mainly triaryloxy dichlorophosphorane) by reacting the aromatic hydroxy compound of the formula (I) with phosphorus pentachloride; and the second step of forming the intended triaryl phosphate by hydrolyzing the above phosphorane compound.

### DETAILED DESCRIPTION OF THE INVENTION

The present invention will be detailed hereinafter.

One of the starting materials used in the process of the present invention is the aromatic hydroxy compound of the formula (I), and this compound is largely classified into two types of compounds, a monohydroxy compound and a dihydroxy compound. In the formula (I), p is 0 or 1. The compound of the formula (I) is an aromatic monohydroxy compound when p is 0, or an aromatic dihydroxy compound when p is 1. When p is 1, however, it does not mean that the two hydroxy groups (OH groups) may be bonding to any positions in the aromatic hydrocarbon skeleton represented by Ar. That is, when Ar has two hydroxy groups, these two hydroxy groups need to be bonding to such positions in Ar that the two hydroxy groups can bond to one phosphorus pentachloride molecule. In other words, the two OH groups of one Ar need to be bonding to positions in Ar to react with one phosphorus pentachloride.

In the present invention, it is preferred to use the compound of the formula (I) in which p is 0, i.e., an aromatic monohydroxy compound.

In the formula (I), Ar is an aromatic hydrocarbon skeleton. Specifically, it is a monocyclic benzene skeleton. 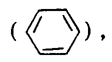
a naphthalene skeleton 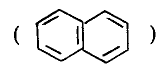
or a diphenyl type skeleton 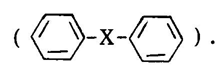
One or two hydroxy groups (OH group) bond to the above aromatic hydrocarbon skeleton as Ar. Further, the aromatic hydrocarbon skeleton as Ar may be substituted with at least one substituent selected from the class consisting of a lower alkyl group, a lower alkoxy group and a halogen atom. The substituent includes a lower alkyl group having 1 to 5 carbon atoms such as methyl, ethyl, n-propyl, isopropyl, n-butyl and isobutyl; an alkoxy group having 1 to 5 carbon atoms such as methoxy, ethoxy, n-propoxy, n-butoxy and t-butoxy; and halogen atoms such as fluorine, chlorine, bromine and iodine. The aromatic hydrocarbon skeleton as Ar may contain one or at least two of the above substituents in the number of 1 to 9, preferably 1 to 4, so long as the reaction is not affected.

When Ar in the formula (I) is a diphenyl type skeleton 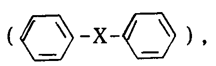
X is a single bond, -CH₂-, -O-, -C(O)-, -S-, -SO₂-, an alkylidene group having 2 to 6 carbon atoms (such as 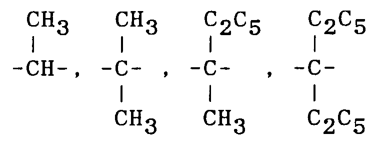
or a cycloalkylidene group having 3 to 6 carbon atoms (such as 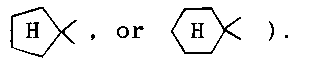
Of these, a single bond and -CH₂- are preferred.

Specific examples of the aromatic hydroxy compound of the formula (I) include monohydroxy compounds such as phenol, 4-methylphenol, 4-isopropylphenol, 4-t-butylphenol, 4-n-butylphenol, 4-n-pentylphenol, 4-neopentylphenol, 4-n-hexylphenol, 4-n-heptylphenol, 4-n-octylphenol, 4-n-nonylphenol, 2-phenylphenol, 4-phenylphenol, 4-cumylphenol, 4-methoxyphenol, 4-phenoxyphenol, 4-bromophenol, 2,4,6-tribromophenol, 2,6-dibromo-4-cumylphenol, 2,4,6-trichlorophenol, 1-naphthol and 2-naphthol; and dihydroxy compounds such as catechol, 2,2'-biphenol, bis(2-hydroxyphenyl)methane and bis(2-hydroxy-4-methyl-6-t-butylphenyl)methane.

The above aromatic hydroxy compounds may be used alone or in combination. Preferred is a monohydroxy compound or a mixture of a monohydroxy compound with a dihydroxy compound. When a dihydroxy compound is used, the resulting triarylphosphate has the structure of the formula (II) in which any two of Ar¹, Ar² and Ar³ form one aromatic hydrocarbon skeleton.

The process for producing the triaryl phosphate, provided by the present invention, is classified into two steps as described before. In the first step, phosphorus pentachloride and the aromatic hydroxy compound are allowed to react in a hydrogen chloride-removing reaction to obtain a chlorophosphorane compound (mainly triaryloxy dichlorophosphorane). In the second step, the chlorophosphorane compound obtained in the first step is optionally isolated and it is reacted with water, an alcohol, an alcohol aqueous solution or an alkaline aqueous solution to obtain triaryl phosphate.

In the first step, phosphorus pentachloride and the aromatic hydroxy compound are allowed to react in the presence or absence of a proper solvent to obtain chlorophosphorane. The amount of the aromatic hydroxy compound is as follows. When the aromatic hydroxy compound is an aromatic monohydroxy compound, the amount of the aromatic monohydroxy compound per mole of the phosphorus pentachloride is 2.8 to 5.0 mol, preferably 3.0 to 3.5 mol. When the aromatic hydroxy compound is an aromatic dihydroxy compound, the amount thereof may be smaller on the above standard. Depending upon the presence or absence of a solvent and the kind of the aromatic hydroxy compound, the reaction temperature differs and cannot be definitely determined. In general, however, it is -30 to 200° C, preferably 10 to 130° C. When no solvent is used or when it is difficult to dissolve the aromatic hydroxy compound in a solvent, a high temperature is required. When a solvent is used and when the aromatic hydroxy compound is easily dissolved in the solvent, the reaction temperature may be low, e.g., room temperature. The above solvent is selected from dichloromethane, chloroform, dichloroethane, tetrachloroethane, xylene, benzene, chlorobenzene, o-dichlorobenzene, n-hexane, n-heptane and dimethylformamide. The amount of the solvent may be selected in a wide range. Generally, the amount of the solvent per part by weight of the phosphorus pentachloride is 1 to 100 parts by weight. The reaction in the first step may be generally carried out in the absence of a catalyst, while a Lewis acid catalyst or an amine catalyst may be used as required.

In the second step, the chlorophosphorane compound (mainly triaryloxydichlorophosphorane) obtained in the first step is allowed to react with water, an alcohol, an alcohol aqueous solution or an alkaline aqueous solution in the presence or absence of a solvent either after the chlorophosphorane compound is isolated or without isolating it, whereby the intended triaryl phosphate is obtained. The amount of the water, alcohol, alcohol aqueous solution or alkaline aqueous solution is 1 to 10,000 mol, preferably 1 to 10 mol, per mole of the phosphorus pentachloride, used in the first step. In particular, when the alkaline aqueous solution is used, it is preferred to use an alkali compound in an amount of 1 to 100 mol per mole of the phosphorus pentachloride in the form of a 0.1 to 12 N aqueous solution. The reaction temperature is -30 to 100° C, preferably 20 to 80° C. In particular, when the alkaline aqueous solution is used, it is preferably 0 to 100° C.

The alcohol used in the second step is preferably selected from lower alcohols such as methanol, ethanol and iso-propanol. The above alkali compound is preferably selected from sodium carbonate, potassium carbonate, calcium carbonate, sodium hydrogencarbonate, potassium hydrogencarbonate, sodium hydroxide, potassium hydroxide and calcium hydroxide. The above solvent is preferably selected from those solvents described regarding the first step, and in an embodiment of use of the solvent, it is preferred to use a solvent in the first step and use the solvent solution of the product obtained in the first step. After the reaction in the second step, the reaction mixture is optionally filtered, concentrated and purified to obtain triaryl phosphate.

In the second step, the following byproducts are formed. When water is used, hydrochloric acid is formed. When an alcohol is used, a corresponding alkyl chloride is formed. When an alkaline aqueous solution is used, an alkali metal salt aqueous solution is formed. These byproducts can be easily removed.

In the process of the present invention, it is considered that the reaction for forming the triaryl phosphate consists mainly of the reaction for forming the chlorophosphorane compound and the reaction for hydrolyzing it, while it is also considered that in addition to the above reactions, for example, a reaction for forming a tetraaryl monochlorophosphorane, followed by heat-decomposition and some disproportionation reactions occur.

The triaryl phosphate obtained by the process of the present invention is useful as a flame retardant, a stabilizer, a plasticizer, a compatibilzier and a lubricant for thermoplastic resins and thermosetting resins. Thermoplastic resins to which the above triaryl phosphate can be incorporated include a broad range of resins; for example, polyolefin resins such as polyethylene and polypropylene, styrene-containing resins such as polystyrene, high-impact polystyrene, an AS resin and an ABS resin, polyamide resins such as nylon 6 and nylon 6·6, polyester resins such as polyethylene terephthalate and polybutylene terephthalate, a polysulfone resin, a polyacetal resin, a polycarbonate resin, and a polyphenylene ether resin.

When the triaryl phosphate is used as a flame retardant, a stabilizer, a plasticizer, a compatibilizer and a lubricant, the amount of the triaryl phosphate differs depending upon polymers to which the triaryl phosphate is incorporated, required properties and required levels, and cannot be definitely determined. Generally, however, the above amount of the triaryl phosphate per 100 parts by weight of the resin is 0.5 to 80 parts by weight, preferably 1 to 40 parts by weight. When the triaryl phosphate is used for various purposes, it may be used together, for example, with other halogen-containing flame retardant, other phosphorus-containing flame retardant, flame retardant aids such as antimony oxide and molybdenum oxide, fillers such as aluminum hydroxide, silica, alumina, mica and calcium sulfate, and reinforcing additives such as a glass fiber and a carbon fiber as required. The triaryl phosphate may be also used together with an effective amount of an antioxidant, an aging preventer, a stabilizer, an ultraviolet light absorbent, a lubricant, a mold releasing agent and a pigment.

### EXAMPLES

The present invention will be explained hereinafter by reference to Examples, which are totally intended for the illustration of the present invention and shall not limit it.

### Comparative Example 1

A 300 ml three-necked flask was charged with 3 g of aluminum chloride and 50 ml of toluene, and a mixture of 77.6 g of phenol, 38.3 g of phosphorus oxychloride and 50 ml of toluene was added thereto dropwise over 10 minutes. Then, the resultant mixture was allowed to react at 80° C for 6 hours. The reaction mixture was cooled, and water was added to separate and wash the reaction mixture. The organic layer was concentrated, and the residue was recrystallized from ethanol to give 74 g of a triphenyl phosphate crystal (melting point 50 - 53° C, yield 91 %).

### Example 1

A 300 ml three-necked flask was charged with 52.4 g of phosphorus pentachloride, and a solution containing 80 g of phenol and 70 ml of dichloromethane was gradually added thereto through a dropping funnel over 25 minutes. After the addition, the mixture was allowed to react at room temperature for 1 hour. Then, 100 ml of methanol was added dropwise over 30 minutes, and thereafter the solvent was distilled off. The residue was recrystallized from ethanol to give 75.3 g of a triphenyl phosphate crystal (melting point 50 - 53° C, yield 92 %). In comparison with Comparative Example 1, it is understood that triphenyl phosphate can be obtained in the absence of a catalyst at a lower temperature for a shorter period of reaction time.

### Comparative Example 2

A 300 ml three-necked flask was charged with 1.3 g of aluminum chloride and 15 ml of toluene, and a mixture of 17.8 g of cresol, 7.7 g of phosphorus oxychloride and 15 ml of toluene was added thereto dropwise over 10 minutes. Then, the resultant mixture was allowed to react at 80° C for 13 hours. The reaction mixture was washed with water, and then the solvent was distilled off. The residue was purified by distillation under reduced pressure to give 15.8 g of a tricresyl phosphate crystal (boiling point under 14 mmHg 270° C, melting point 137 - 140° C, yield 86 %).

### Example 2

A 300 ml three-necked flask was charged with 10.4 g of phosphorus pentachloride, and a solution containing 17.8 g of cresol and 30 ml of dichloromethane was gradually added thereto through a dropping funnel over 10 minutes. After the addition, the mixture was allowed to react at room temperature for 1 hour. Then, 50 ml of methanol was added dropwise over 15 minutes, and thereafter the solvent was distilled off. The residue was purified by distillation under reduced pressure to give 16.9 g of a tricresyl phosphate crystal (boiling point under 14 mmHg 270° C, melting point 137 - 140° C, yield 86 %). In comparison with Comparative Example 2, it is understood that tricresyl phosphate can be obtained in the absence of a catalyst at a lower temperature for a shorter period of reaction time.

### Example 3

A 300 ml three-necked flask was charged with 10.4 g of phosphorus pentachloride and 35.1 g of p-cumylphenol, and while the mixture was stirred, 50 ml of dichloromethane was added over 10 minutes. After the addition, the mixture was allowed to react at room temperature for 1 hour. Then, 50 ml of methanol was added dropwise over 10 minutes, and thereafter the solvent was removed. The residue was washed with methanol to give 31.6 g of a tris(p-cumylphenyl) phosphate crystal (melting point 137 - 140° C, yield 93 %) .

### Example 4

A 300 ml three-necked flask was charged with 10.4 g of phosphorus pentachloride and 35.1 g of p-cumylphenol, and the mixture was stirred in the absence of a solvent at 120° C for 1 hour. Then, 150 ml of methanol was added dropwise over 10 minutes, and thereafter a crude crystal was recovered by filtration. The crude crystal was washed with methanol to give 31.5 g of a tris(p-cumylphenyl) phosphate crystal (melting point 137 - 140° C, yield 93 %).

### Example 5

A 300 ml three-necked flask was charged with 10.4 g of phosphorus pentachloride and 28.1 g of p-phenylphenol, and while the mixture was stirred, 50 ml of dichloromethane was added thereto over 10 minutes. After the addition, the mixture was allowed to react at room temperature for 1 hour. Then, 50 ml of methanol was added dropwise over 10 minutes, and thereafter the solvent was removed. The residue was washed with methanol to give 25.4 g of a tris(p-phenylphenyl) phosphate crystal (melting point 130 - 132° C, yield 92 %) .

### Example 6

A 300 ml three-necked flask was charged with 10.4 g of phosphorus pentachloride and 28.1 g of p-phenylphenol, and the mixture was stirred at 170° C for 1 hour in the absence of a solvent. Then, 150 ml of methanol was added dropwise over 10 minutes, and thereafter a crude crystal was recovered by filtration. The crude crystal was washed with methanol to give 20.9 g of a tris(p-phenylphenyl) phosphate crystal (melting point 130 - 132° C, yield 76 %).

### Example 7

A 300 ml three-necked flask was charged with 10.4 g of phosphorus pentachloride and 28.1 g of o-phenylphenol, and while the mixture was stirred, 50 ml of dichloromethane was added over 10 minutes. After the addition, the mixture was allowed to react at room temperature for 1 hour. Then, 50 ml of methanol was added dropwise over 10 minutes, and thereafter the solvent was removed. The residue was washed with methanol to give 22.1 g of a tris(o-phenylphenyl) phosphate crystal (melting point 110 - 111° C, yield 80 %).

### Example 8

A 300 ml three-necked flask was charged with 10.4 g of phosphorus pentachloride and 28.1 g of o-phenylphenol, and the mixture was stirred at 120° C for 1 hour in the absence of a solvent. Then, 150 ml of methanol was added dropwise over 10 minutes, and thereafter a crude crystal was recovered by filtration. The crude crystal was washed with methanol to give 24.9 g of a tris(o-phenylphenyl) phosphate crystal (melting point 110 - 111° C, yield 90 %).

### Example 9

A 300 ml three-necked flask was charged with 10.4 g of phosphorus pentachloride and 28.6 g of p-bromolphenol, and while the mixture was stirred, 50 ml of dichloromethane was added over 10 minutes. After the addition, the mixture was allowed to react at room temperature for 1 hour. Then, 50 ml of methanol was added dropwise over 10 minutes, and thereafter the solvent was removed. The residue was washed with methanol to give 26.1 g of a tris(p-bromophenyl) phosphate crystal (melting point 98 - 100° C, yield 92 %).

### Example 10

A 50 liter reactor made of glass was charged with 13.76 kg of 2,4,6-tribromophenol and 21.04 kg of chlorobenzene, and 8.4 kg of the chlorobenzene was distilled off at a bath temperature of 170° C to remove water contained in the tribromophenol. The mixture was cooled to room temperature, and then 19.01 kg of a solution of 2.88 kg of phosphorus pentachloride in chlorobenzene was gradually added over 30 minutes. The mixture was stirred until foaming terminated, and further, the temperature of the mixture was increased with stirring. The mixture was allowed to react at 130° C for 30 minutes, and the reaction mixture was cooled. The reaction mixture was poured into 17.33 g of a solution of 2.33 g of sodium carbonate in water for hydrolysis, and the organic layer was washed with a sodium hydroxide aqueous solution and concentrated under heat and under reduced pressure. Methanol was added to the residue to precipitate a solid, and the solid was recovered by filtration to give 10.15 kg of a tris(2,4,6-tribromophenyl)phosphate crystal (melting point 216 - 219° C, yield 71 %).

### Example 11

A 300 ml three-necked flask was charged with 10.4 g of phosphorus pentachloride and 17.0 g of bis(2-hydroxy-4-methyl-6-tert-butylphenyl)methane, and while the mixture was stirred, 40 g of chlorobenzene was added dropwise over 10 minutes. The mixture was allowed to react at room temperature for 3 hours. Then, a solution of 4.7 g of phenol in 10 g of chlorobenzene was added dropwise over 5 minutes, and the resultant mixture was allowed to react at room temperature for 2 hours and at 80 C for 1 hour. The reaction mixture was allowed to cool to room temperature and added dropwise to 300 ml of water over 10 minutes with stirring, and the mixture was stirred at room temperature for 30 minutes. The organic layer was washed with water twice, and then mixed with 150 g of hexane. The mixture was stirred for 30 minutes. The reaction mixture was allowed to stand for 30 minutes, and a supernatant was removed by decantation. The residue was purified with a solvent mixture of chlorobenzene and hexane to give 4.8 g of 2,2'-methylenebis(4-methyl-6-tert-butylphenyl)phenyl phosphate (yield 40 %).

### Effect of the Invention:

According to the present invention, triaryl phosphate can be produced by a reaction between phosphorus pentachloride and an aromatic hydroxy compound for a very short period of time as compared with conventional processes. Further, triaryl phosphate can be produced at room temperature in the presence of a solvent. Furthermore, no catalyst is required. Therefore, the present invention produces excellent labor saving effects that the removal of a catalyst from the product and the treatment of the catalyst can be omitted. Therefore, the present invention produces excellent effects that the production facilities can be simplified and the production efficiency can be improved.

## Claims

1. A process for producing a triaryl phosphate of the formula (II), 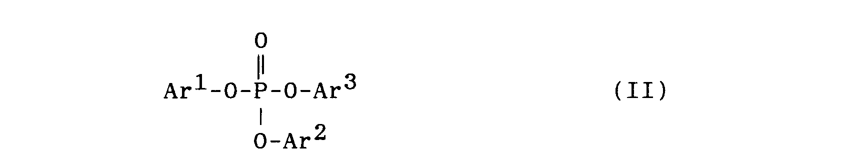 wherein each of Ar¹, Ar² and Ar³ is independently derived from aromatic hydrocarbon skeletons of 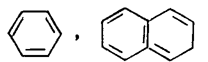 and 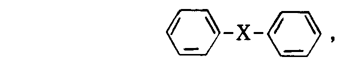 in which X is a single bond, -CH₂-, -O-, -C(O)-, -S-, -SO₂-, an alkylidene group having 2 to 6 carbon atoms or a cycloalkylidene group having 3 to 6 carbon atoms, and each of Ar¹, Ar² and Ar³ may be also substituted with at least one selected from the class consisting of a lower alkyl group, a lower alkoxy group and a halogen atom, provided that any two of Ar¹, Ar² and Ar³ may be one aromatic hydrocarbon skeleton,
which comprises reacting an aromatic hydroxy compound of the formula (I),
HO-Ar-(OH)ₚ (I)
wherein p is 0 or 1, provided that when p is 1, two OH groups bond to positions in Ar where the two OH groups can bond to one phosphorus pentachloride, and Ar is an aromatic hydrocarbon skeleton of 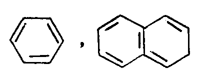 or 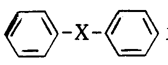 in which X is a single bond, -CH₂-, -O-, -C(O)-, -S-, -SO₂-, an alkylidene group having 2 to 6 carbon atoms or a cycloalkylidene group having 3 to 6 carbon atoms, and Ar may be also substituted with at least one selected from the class consisting of a lower alkyl group, a lower alkoxy group and a halogen atom,
with phosphorus pentachloride to form a chlorophosphorane compound, and a second step of reacting water, an alcohol, an alcohol aqueous solution or an alkaline aqueous solution with the chlorophosphorane compound.

2. The process of claim 1, wherein the aromatic hydroxy compound is a compound of the formula (I) wherein p is 0.

3. The process of claim 1, wherein the first step is carried out at a temperature between -30° C and 200° C.

4. The process of claim 1, wherein the second step is carried out at a temperature between -30° C and 100° C.

5. The process of claim 1, wherein at least first step is carried out in the substantial absence of a catalyst.

6. The process of claim 1, wherein at least first step is carried out in the substantial absence of a solvent.
